(19)
Europäisches
Patentamt
European
Patent Office
Office européen
des brevets

(11) **EP 3 633 996 A1**

(12) **EUROPEAN PATENT APPLICATION**

(43) Date of publication:
08.04.2020 Bulletin 2020/15

(51) Int Cl.:
*H04N 19/523* (2014.01)   *H04N 19/51* (2014.01)
*H04N 19/517* (2014.01)   *H04N 19/70* (2014.01)

(21) Application number: **19210847.0**

(22) Date of filing: **04.10.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.10.2009 US 25150809 P**

(62) Document number(s) of the earlier application(s) in
accordance with Art. 76 EPC:
**10776444.1 / 2 489 189**

(71) Applicant: **InterDigital Madison Patent Holdings
75017 Paris (FR)**

(72) Inventors:
 • **GUO, Liwei
  Plainsboro, NJ 08536 (US)**
 • **ZHENG, Yunfei
  San Diego, CA 92130 (US)**

 • **YIN, Peng
  Ithaca, NY 14850 (US)**
 • **SOLE, Joel
  La Jolla, CA 92037 (US)**
 • **LU, Xiaoan
  Princeton, NJ 08540 (US)**
 • **XU, Qian
  Folsom, CA 95630 (US)**

(74) Representative: **Vidon Brevets & Stratégie
16B, rue de Jouanet
BP 90333
35703 Rennes Cedex 7 (FR)**

Remarks:
This application was filed on 22.11.2019 as a
divisional application to the application mentioned
under INID code 62.

(54) **METHODS AND APPARATUS FOR ADAPTIVE CODING OF MOTION INFORMATION**

(57)    Methods and apparatus are provided for adaptive coding of motion information. Such an apparatus comprises a processor configured to encode a block in a picture using a motion vector, wherein an adaptive motion vector accuracy scheme is used to select an accuracy of the motion vector used to encode the block, and wherein at least one flag is indicative of motion vector accuracy adaptation for the block.

FIG. 3

EP 3 633 996 A1

**Description**

CROSS-REFERENCE TO RELATED APPLICATIONS

This application claims the benefit of U.S. Provisional Application Serial No. 61/251,508, filed October 14, 2009, which is incorporated by reference herein in its entirety.

TECHNICAL FIELD

The present principles relate generally to video encoding and decoding and, more particularly, to methods and apparatus for adaptive coding of motion information.

BACKGROUND

Motion compensation is an important component in many video coding frameworks. Motion compensation plays a crucial role in video coding to utilize temporal redundancy for purposes of compression. It is a way to infer video color data by using motion information.

Motion in a video signal can be represented in many ways. The most popular representation is a motion vector, which is a displacement based representation. Although a motion vector is not accurate enough to represent all types of motion, simplicity and easy to use characteristics make motion vectors popular in many video related applications. To achieve better accuracy in describing motion information, sub-pel accuracy motion vectors are often preferred in order to remove aliasing due to the limited spatial and temporal sampling rate of imaging devices.

The performance of motion compensation is highly dependent on the accuracy of the motion vectors and the related interpolation process if sub-pel accuracy motion is involved.

Increasing the accuracy of motion vectors can improve the quality of motion compensation, but the cost to code higher accuracy motion vectors is also increased. Therefore, increased motion vector accuracy comes at the expense of increased coding cost and results in additional required bandwidth to transmit the coded video (or additional memory to store the coded video). In the International Organization for Standardization/International Electrotechnical Commission (ISO/IEC) Moving Picture Experts Group-4 (MPEG-4) Part 10 Advanced Video Coding (AVC) Standard/International Telecommunication Union, Telecommunication Sector (ITU-T) H.264 Recommendation (hereinafter the "MPEG-4 AVC Standard"), a state of the art video coding standard, motion vectors are quarter-pel accurate and are losslessly compressed due to their importance. The quarter-pel accuracy motion vector is a good trade-off to improve the coding efficiency over the previous coding standards. However, most of coding standards use uniform motion vector accuracy without considering the relationship between the motion information and video content. For example, the MPEG-4 AVC Standard uses quarter-pel accuracy for everywhere in a video picture, every picture in a video sequence, and all video sequences.

By utilizing motion vectors with quarter-pel accuracy, more coding gains are achievable over past standards due to increased motion vector accuracy. With quarter-pel accuracy motion vectors, the motion compensation process is dependent on suitable interpolation filters. In the MPEG-4 AVC Standard, a 6-tap linear filter is applied at a half-pel interpolation stage and a linear interpolation is used at a quarter-pel stage. To further improve the performance of motion compensation, an adaptive interpolation filter (AIF) is applied to reduce the motion compensation errors by updating the interpolation filter for each sub-pel position frame by frame. However, all of these schemes only consider reducing the motion compensation error and, hence, did not reduce the cost of motion vectors with quarter-pel accuracy.

When the true motion is just integer accuracy, coding quarter-pel accuracy motion vectors is not necessary and wastes a lot of bits. Thus, such a uniform accuracy scheme is far from optimal in the sense of rate-distortion cost.

Work has been performed to reduce the redundancy in motion vectors for better coding performance. For example, in a first prior art approach, a motion vector quantization scheme is described that allows lossy compression of the motion vector instead of the lossless scheme in the MPEG-4 AVC Standard. Furthermore, the scheme adds additional coding modes, referred to as QMV modes, together with other existing modes of the MPEG-4 AVC Standard. In the QMV modes, a motion vector of a partition will be quantized before entropy encoding. The quantization step $Qv$ can be different in various macro blocks to realize spatial adaptation. The QMV modes can obtain an adaptation in representing the motion vector in a different accuracy based on rate distortion. The additional cost spent on transmitting $Qv$ values and QMV mode information could eat up the gains brought by the rate saving in the motion vectors.

SUMMARY

These and other drawbacks and disadvantages of the prior art are addressed by the present principles, which are directed to methods and apparatus for adaptive coding of motion information.

According to an aspect of the present principles, an apparatus is provided. The apparatus comprises a processor configured to encode a block in a picture using a motion vector, wherein an adaptive motion vector accuracy scheme is used to select an accuracy of the motion vector used to encode the block, and wherein at least one flag is indicative of motion vector accuracy adaptation for the block.

• According to another aspect of the present principles, a method is provided in a video encoder. The method comprises encoding a block in a picture using a motion vector, wherein an adaptive motion vector accuracy scheme is used to select an accuracy of the motion vector used to encode the block, and wherein at least one flag is indicative of motion vector accuracy adaptation for the block.

• According to yet another aspect of the present principles, an apparatus is provided. The apparatus comprises a processor configured to decode a block in a picture using a motion vector, wherein an adaptive motion vector accuracy scheme is used to select an accuracy of the motion vector used to decode the block, and wherein at least one flag is indicative of motion vector accuracy adaptation for the block.

• According to still another aspect of the present principles, there is provided a method in a video decoder. The method comprises decoding a block in a picture using a motion vector, wherein an adaptive motion vector accuracy scheme is used to select an accuracy of the motion vector used to decode the block, and wherein at least one flag is indicative of motion vector accuracy adaptation for the block.

These and other aspects, features and advantages of the present principles will become apparent from the following detailed description of exemplary embodiments, which is to be read in connection with the accompanying drawings.

BRIEF DESCRIPTION OF THE DRAWINGS

The present principles may be better understood in accordance with the following exemplary figures, in which:

FIG. 1 is a bock diagram showing an exemplary video encoder to which the present principles may be applied, in accordance with an embodiment of the present principles;
FIG. 2 is a bock diagram showing an exemplary video decoder to which the present principles may be applied, in accordance with an embodiment of the present principles;
FIG. 3 is a flow diagram showing an exemplary method for encoding picture data using adaptive coding of motion information based on partition size, in accordance with an embodiment of the present principles;
FIG. 4 is a flow diagram showing an exemplary method for decoding picture data using adaptive coding of motion information based on partition size, in accordance with an embodiment of the present principles;
FIG. 5 is a flow diagram showing an exemplary method for encoding picture data using adaptive coding of motion information based on motion vector directions, in accordance with an embodiment of the present principles;
FIG. 6 is a flow diagram showing an exemplary method for decoding picture data using adaptive coding of motion information based on motion vector directions, in accordance with an embodiment of the present principles;
FIG. 7 is a flow diagram showing an exemplary method for encoding picture data using adaptive coding of motion information based on quantization parameter, in accordance with an embodiment of the present principles;
FIG. 8 is a flow diagram showing an exemplary method for decoding picture data using adaptive coding of motion information based on quantization parameter, in accordance with an embodiment of the present principles;
FIG. 9 is a flow diagram showing an exemplary method for encoding picture data using adaptive coding of motion information based on video content with explicit signaling, in accordance with an embodiment of the present principles;
FIG. 10 is a flow diagram showing an exemplary method for decoding picture data using adaptive coding of motion information based on video content with explicit signaling, in accordance with an embodiment of the present principles;
FIG. 11 is a flow diagram showing an exemplary method for encoding picture data using adaptive coding of motion information based on video content with implicit signaling, in accordance with an embodiment of the present principles;
FIG. 12 is a flow diagram showing an exemplary method for decoding picture data using adaptive coding of motion information based on video content with implicit signaling, in accordance with an embodiment of the present principles;
FIG. 13 is a flow diagram showing an exemplary method for encoding picture data using adaptive coding of motion information based on motion vector amplitude, in accordance with an embodiment of the present principles; and
FIG. 14 is a flow diagram showing an exemplary method for decoding picture data using adaptive coding of motion information based on motion vector amplitude with implicit signaling, in accordance with an embodiment of the present principles.

DETAILED DESCRIPTION

The present principles are directed to methods and apparatus for adaptive coding of motion information.

The present description illustrates the present principles. It will thus be appreciated that those skilled in the art will be able to devise various arrangements that, although not explicitly described or shown herein, embody the present principles and are included within its spirit and scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

Moreover, it is to be appreciated that while one or more embodiments of the present principles are described herein with respect to the MPEG-4 AVC Standard, the present principles are not limited to solely this standard and, thus, may be utilized with respect to other video coding standards, recommendations, and extensions thereof, including extensions of the MPEG-4 AVC standard, as well as proprietary and future standards or schemes, while maintaining the spirit of the present principles.

Also, as used herein, the words "picture" and "image" are used interchangeably and refer to a still image or a picture from a video sequence. As is known, a picture may be a frame or a field.

Additionally, as used herein, the word "signal" refers to indicating something to a corresponding decoder. For example, the encoder may signal a given motion vector accuracy in order to make the decoder aware of which particular motion vector accuracy was used on the encoder side. In this way, the same motion vector accuracy may be used at both the encoder side and the decoder side. Thus, for example, an encoder may transmit a particular motion vector accuracy to the decoder so that the decoder may use the same particular motion vector accuracy or, if the decoder already has the particular motion vector accuracy as well as others, then signaling may be used (without transmitting) to simply allow the decoder to know and select the particular motion vector accuracy. By avoiding transmission of any actual motion vector accuracies, a bit savings may be realized. It is to be appreciated that signaling may be accomplished in a variety of ways. For example, one or more syntax elements, flags, and so forth may be used to signal information to a corresponding decoder.

Moreover, as used herein, the phrase "local picture region" refers to a subset signal of a video sequence. Local picture region can be a number of consecutive frames, a single frame, a number of temporally and/or spatially neighboring blocks, and/or a number of temporally and/or spatially neighboring pixels.

Also, as used herein, the phrase "global motion information" refers to the dominant motion in a "picture region". As used herein, the phrase "picture region" refers to a number of frames belonging to the same scene, a single frame, and/or a portion in a single frame. Some examples of global motion information are provided as follows. In one example, we estimate the motion for every block in a particular picture region, and the global motion information is the most common motion in these blocks. In another example, we estimate the motion for every block in a particular picture region, and the global motion information is the motion averaged over all these blocks. In yet another example, we estimate the motion for every block in a particular picture region, and the global motion information is the median motion among all these blocks.

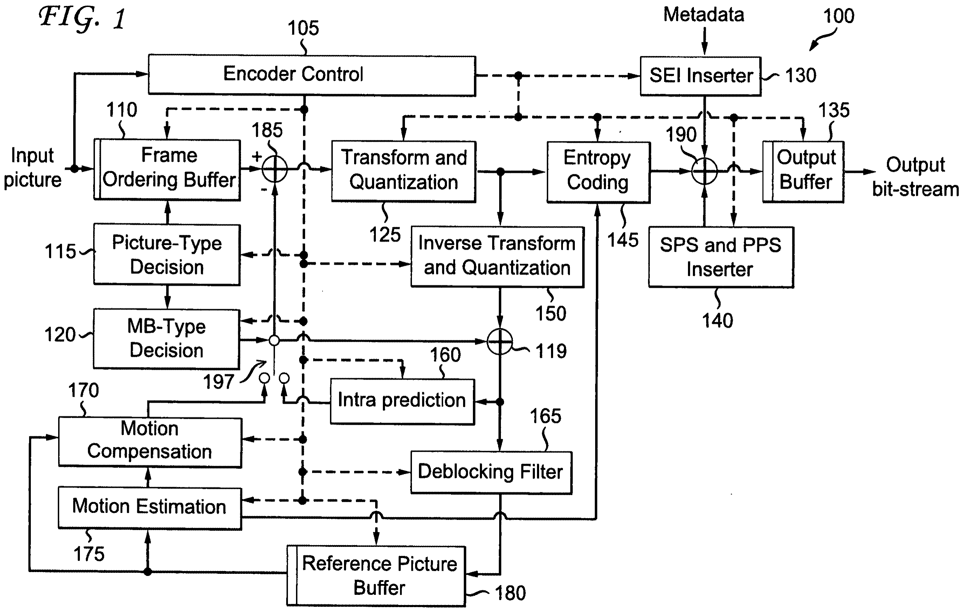

Turning to FIG. 1, an exemplary video encoder to which the present principles may be applied is indicated generally by the reference numeral 100. The video encoder 100 includes a frame ordering buffer 110 having an output in signal communication with a non-inverting input of a combiner 185. An output of the combiner 185 is connected in signal communication with a first input of a transformer and quantizer 125. An output of the transformer and quantizer 125 is connected in signal communication with a first input of an entropy coder 145 and a first input of an inverse transformer and inverse quantizer 150. An output of the entropy coder 145 is connected in signal communication with a first non-inverting input of a combiner 190. An output of the combiner 190 is connected in signal communication with a first input of an output buffer 135.

A first output of an encoder controller 105 is connected in signal communication with a second input of the frame ordering buffer 110, a second input of the inverse transformer and inverse quantizer 150, an input of a picture-type decision module 115, a first input of a macroblock-type (MB-type) decision module 120, a second input of an intra prediction module 160, a second input of a deblocking filter 165, a first input of a motion compensator 170, a first input of a motion estimator 175, and a second input of a reference picture buffer 180.

A second output of the encoder controller 105 is connected in signal communication with a first input of a Supplemental Enhancement Information (SEI) inserter 130, a second input of the transformer and quantizer 125, a second input of the entropy coder 145, a second input of the output buffer 135, and an input of the Sequence Parameter Set (SPS) and Picture Parameter Set (PPS) inserter 140.

An output of the SEI inserter 130 is connected in signal communication with a second non-inverting input of the combiner 190.

A first output of the picture-type decision module 115 is connected in signal communication with a third input of the frame ordering buffer 110. A second output of the picture-type decision module 115 is connected in signal communication with a second input of a macroblock-type decision module 120.

An output of the Sequence Parameter Set (SPS) and Picture Parameter Set (PPS) inserter 140 is connected in signal communication with a third non-inverting input of the combiner 190.

An output of the inverse quantizer and inverse transformer 150 is connected in signal communication with a first non-inverting input of a combiner 119. An output of the combiner 119 is connected in signal communication with a first input of the intra prediction module 160 and a first input of the deblocking filter 165. An output of the deblocking filter 165 is connected in signal communication with a first input of a reference picture buffer 180. An output of the reference picture buffer 180 is connected in signal communication with a second input of the motion estimator 175 and a third input of the motion compensator 170. A first output of the motion estimator 175 is connected in signal communication with a second input of the motion compensator 170. A second output of the motion estimator 175 is connected in signal communication with a third input of the entropy coder 145.

An output of the motion compensator 170 is connected in signal communication with a first input of a switch 197. An output of the intra prediction module 160 is connected in signal communication with a second input of the switch 197. An output of the macroblock-type decision module 120 is connected in signal communication with a third input of the switch 197. The third input of the switch 197 determines whether or not the "data" input of the switch (as compared to the control input, i.e., the third input) is to be provided by the motion compensator 170 or the intra prediction module 160. The output of the switch 197 is connected in signal communication with a second non-inverting input of the combiner 119 and an inverting input of the combiner 185.

A first input of the frame ordering buffer 110 and an input of the encoder controller 105 are available as inputs of the encoder 100, for receiving an input picture. Moreover, a second input of the Supplemental Enhancement Information (SEI) inserter 130 is available as an input of the encoder 100, for receiving metadata. An output of the output buffer 135 is available as an output of the encoder 100, for outputting a bitstream.

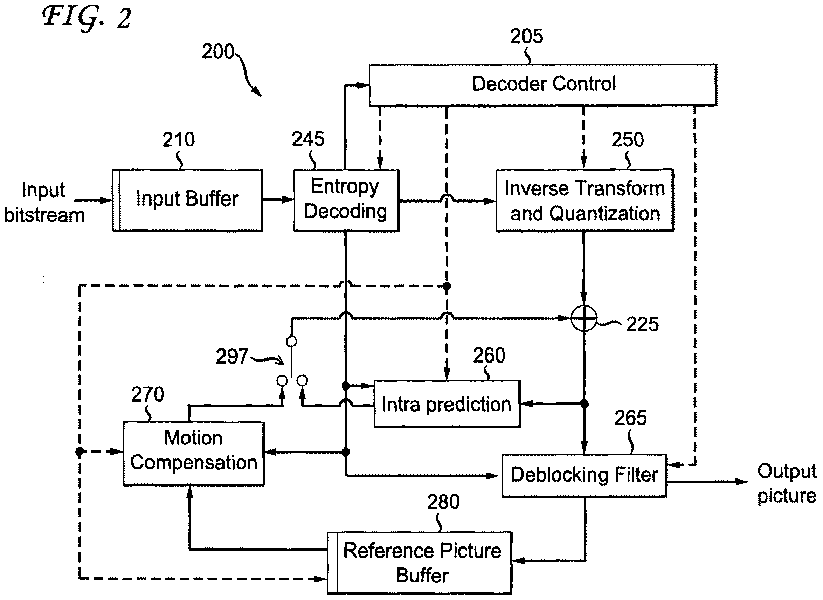

Turning to FIG. 2, an exemplary video decoder to which the present principles may be applied is indicated generally by the reference numeral 200. The video decoder 200 includes an input buffer 210 having an output connected in signal communication with a first input of an entropy decoder 245. A first output of the entropy decoder 245 is connected in signal communication with a first input of an inverse transformer and inverse quantizer 250. An output of the inverse transformer and inverse quantizer 250 is connected in signal communication with a second non-inverting input of a combiner 225. An output of the combiner 225 is connected in signal communication with a second input of a deblocking filter 265 and a first input of an intra prediction module 260. A second output of the deblocking filter 265 is connected in signal communication with a first input of a reference picture buffer 280. An output of the reference picture buffer 280 is connected in signal communication with a second input of a motion compensator 270.

A second output of the entropy decoder 245 is connected in signal communication with a third input of the motion compensator 270, a first input of the deblocking filter 265, and a third input of the intra predictor 260. A third output of the entropy decoder 245 is connected in signal communication with an input of a decoder controller 205. A first output of the decoder controller 205 is connected in signal communication with a second input of the entropy decoder 245. A second output of the decoder controller 205 is connected in signal communication with a second input of the inverse transformer and inverse quantizer 250. A third output of the decoder controller 205 is connected in signal communication with a third input of the deblocking filter 265. A fourth output of the decoder controller 205 is connected in signal communication with a second input of the intra prediction module 260, a first input of the motion compensator 270, and a second input of the reference picture buffer 280.

An output of the motion compensator 270 is connected in signal communication with a first input of a switch 297. An output of the intra prediction module 260 is connected in signal communication with a second input of the switch 297. An output of the switch 297 is connected in signal communication with a first non-inverting input of the combiner 225.

An input of the input buffer 210 is available as an input of the decoder 200, for receiving an input bitstream. A first output of the deblocking filter 265 is available as an output of the decoder 200, for outputting an output picture.

As noted above, the present principles are directed to methods and apparatus for adaptive coding of motion information. Thus, in accordance with the present principles, an adaptive motion information representation and compression approach is utilized to improve video coding performance by better exploiting the correlation between motion information and video content. The approach represents motion vectors in different levels of accuracy adaptively by considering the motion field, video content, coding mode, and coding efficiency, without incurring an additional bit overhead for the adaptation (or at least limiting the additional bit overhead).

**Partition size adaptation**

In a typical block-based video coding scheme, a picture is divided into a multiplicity of non-overlapping blocks. The optimal block shape and size is dependent on the video content and coding schemes. The MPEG-4 AVC Standard supports 16x16, 16x8, 8x16, 8x8, 8x4, 4x8, and 4x4 blocks. As we can see, a larger block has more pixels than a smaller block. The motion compensation error is contributed by the error from each pixel. If a block includes more pixels, then that block has a relatively higher possibility of having a larger compensation error assuming the error from each pixel is uniform. Hence, we prefer to use a higher accuracy motion vector for a larger block compared to a smaller block. Thus, in an embodiment, we adapt the motion vector accuracy to the partition size.

In general, we can use a higher accuracy for the motion vector of a large block because a large block covers more area in a video and has a high probability of contributing a large amount of distortion if not correctly compensated. TABLE 1 shows a classification of different block sizes into different accuracy levels, in accordance with an embodiment of the present principles. Of course, it is to be appreciated that the present principles are not limited to the preceding classification and, thus, other classifications may also be used in accordance with the teachings of the present principles, while maintaining the spirit of the present principles.

**TABLE 1**

| Level | Partition size | Motion Vector Accuracy |
|-------|----------------|------------------------|
| 0 | 16x16, 16x8, 8x16 | 1/8 pel |
| 1 | 8x8 | 1/4 pel |
| 2 | 8x4, 4x8, 4x4 | 1/2 pel |

The motion vector of each block will be represented with the corresponding accuracy of that level. Based on the partition size, which is already transmitted, there is no additional bit rate spending on the motion vector accuracy adaptation.

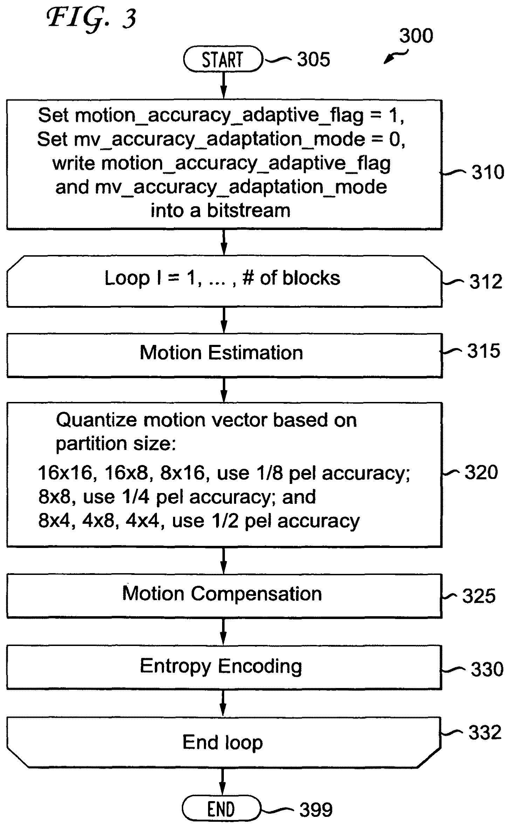

Turning to FIG. 3, an exemplary method for encoding picture data using adaptive coding of motion information based on partition size is indicated generally by the reference numeral 300. The method 300 includes a start block 305 that passes control to a function block 310. The function block 310 sets motion_accuracy_adaptive_flag = 1, sets mv_accuracy_adaptation_mode = 0, writes motion_accuracy_adaptive_flag and mv_accuracy_adaptation_mode into a bitstream, and passes control to a loop limit block 312. The loop limit block 312 begins a loop using a variable I having a range from 1 to the number # of blocks, and passes control to a function block 315. The function block 315 performs motion estimation, and passes control to a function block 320. The function block 320 quantizes a resultant motion vector from the motion estimation (performed by function block 315) based on partition size as follows, thereafter passing control to a function block 325: 16x16, 16x8, 8x16 partition sizes use 1/8 pel accuracy; 8x8 partition size uses ¼ pel accuracy; and 8x4, 4x8, 4x4 partition sizes use ½ pel accuracy. The function block 325 performs motion compensation, and passes control to a function block 330. The function block 330 performs entropy encoding, and passes control to a loop limit block 332. The loop limit block ends the loop, and passes control to an end block 399.

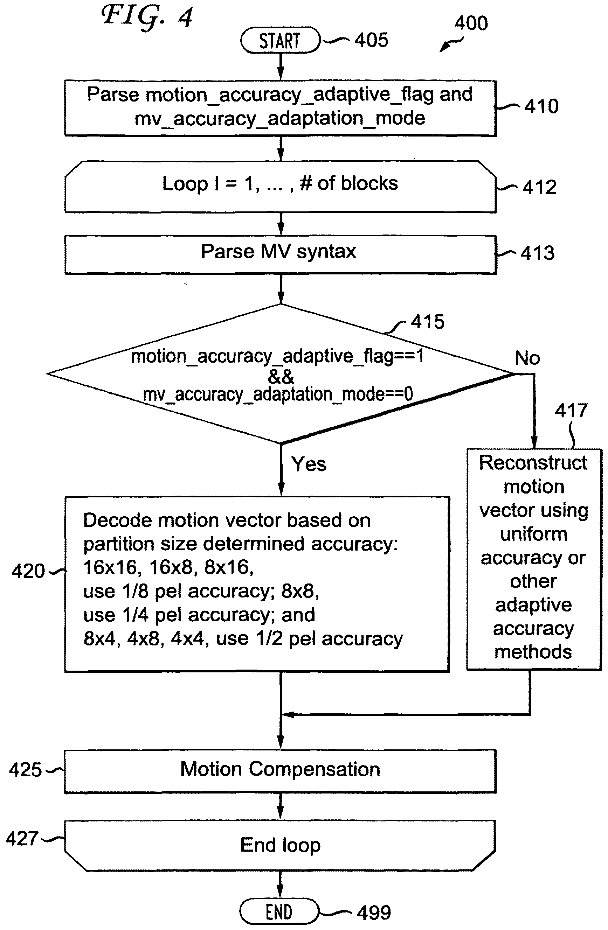

Turning to FIG. 4, an exemplary method for decoding picture data using adaptive coding of motion information based on partition size is indicated generally by the reference numeral 400. The method 400 includes a start block 405 that passes control to a function block 410. The function block 410 parses motion_accuracy_adaptive_flag and mv_accuracy_adaptation_mode, and passes control to a loop limit block 412. The loop limit block 412 begins a loop using a variable I having a range from 1 to the number (#) of blocks, and passes control to a function block 413. The function block 413 parses the motion vector (MV) syntax, and passes control to a decision block 415. The decision block 415 determines whether or not motion_accuracy_adaptive_flag == 1 and mv_accuracy_adaptation_mode == 0. If so, then control is passed to a function block 420. Otherwise, control is passed to a function block 417. The function block 420 decodes the motion vector based on partition size determined accuracy as follows, thereafter passing control to the function block 425: 16x16, 16x8, 8x16 partition sizes use 1/8 pel accuracy; 8x8 partition size use ¼ pel accuracy; and 8x4, 4x8, and 4x4 partition sizes use ½ pel accuracy. The function block 425 performs motion compensation, and passes control to a loop limit block 427. The loop limit block 427 ends the loop, and passes control to an end block 499. The function block 417 reconstructs a motion vector using uniform accuracy or other adaptive accuracy methods, and passes control to the function block 425.

**Motion vector directional adaptation**

In most motion vector representations, the motion vector is a two dimensional vector, which describes the motion in both horizontal and vertical directions. Usually, a motion vector has the same accuracy in both directions. However, it is not required to have the same accuracy in different directions, especially when we have some prior information about motion. For example, if a video has dominant horizontal motion (like camera panning), then we can provide a higher accuracy in the horizontal direction in order to better represent the motion information. We can also exploit the integer motion amplitude, partition shape, motion vector predictor, or global motion information in order to signal the high accuracy motion direction. Thus, in an embodiment, we adapt the motion vector accuracy to one or more particular directions of a motion vector.

In one embodiment, we exploit the motion vector predictor to derive the dominant motion direction. We will assign the dominant motion direction a higher motion vector accuracy (than the non-dominant motion direction). Motion vector predictor *mvp* = [*mvp_x, mvp_y*] can be obtained as set forth in the MPEG-4 AVC Standard by checking the motion vectors of neighboring blocks. We define the following parameter:

$$\theta(mvp) = \begin{cases} \dfrac{|mvp\_y|}{|mvp\_x|}, |mvp\_x| \neq 0 \\ Inf., |mvp\_x| = 0 \end{cases} \qquad (1)$$

By checking $\theta(mvp)$, we can decide which direction uses higher accuracy as follows:

$$\begin{cases} res(mv\_y) = 1/8, res(mv\_x) = 1/4, \theta(mvp) \geq th1 \\ res(mv\_y) = res(mv\_x) = 1/4, th1 > \theta(mvp) > th2, \\ res(mv\_y) = 1/4, res(mv\_x) = 1/8, \theta(mvp) \leq th2 \end{cases} \qquad (2)$$

where *res(mv_x)* and *res(mv_y)* are the respective resolutions (i.e., accuracies) of *mv_x* and *mv_y,* and *th1* and *th2* are two thresholds to determine the accuracy of motion vectors in different directions.

By using this scheme, we can adapt the accuracies of a motion vector in different directions without incurring additional overhead.

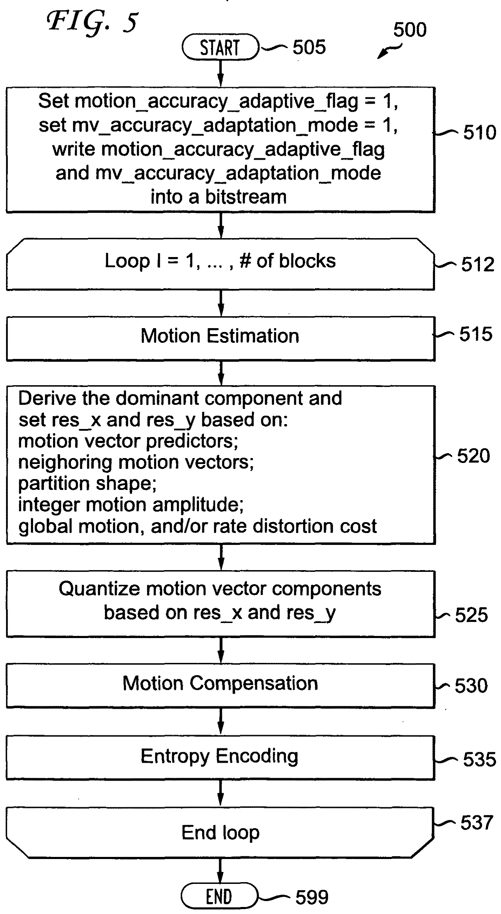

Turning to FIG. 5, an exemplary method for encoding picture data using adaptive coding of motion information based on motion vector directions is indicated generally by the reference numeral 500. The method 500 includes a start block 505 that passes control to a function block 510. The function block 510 sets motion_accuracy_adaptive_flag = 1, sets mv_accuracy_adaptation_mode = 1, writes motion_accuracy_adaptive_flag and mv_accuracy_adaptation_mode into the bitstream, and passes control to a loop limit block 512. The loop limit block 512 begins a loop using a variable I having a range from 1 to the number (#) of blocks, and passes control to a function block 515. The function block 515 performs motion estimation, and passes control to a function block 520. The function block 520 derives the dominant component and sets res x and res_y based on one or more of the following, thereafter passing control to a function block 525: motion vector predictors; neighboring motion vectors; partition shape; integer motion amplitude; global motion; and/or rate distortion cost. The function block 525 quantizes the motion vector components based on res_x and res_y, and passes control to a function block 530. The function block 530 performs motion compensation, and passes control to a function block 535. The function block 535 performs entropy encoding, and passes control to a loop limit block 537. The loop limit block 537 ends the loop, and passes control to an end block 599.

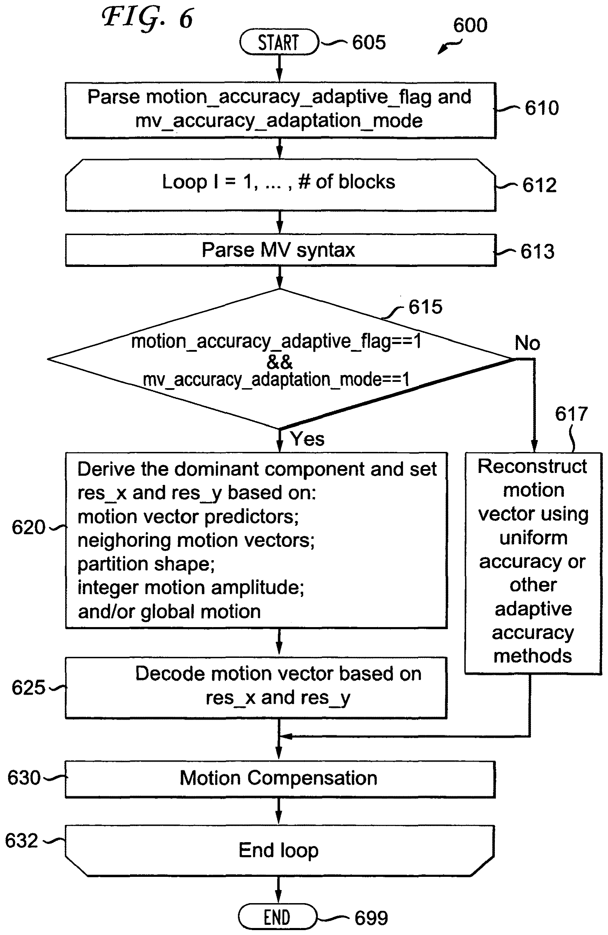

Turning to FIG. 6, an exemplary method for decoding picture data using adaptive coding of motion information based on motion vector directions is indicated generally by the reference numeral 600. The method 600 includes a start block 605 that passes control to a function block 610. The function block 610 parses motion_accuracy_adaptive_flag and mv_accuracy_adaptation_mode, and passes control to a loop limit block 612. The loop limit block 612 begins a loop using a variable I having a range from 1 to the number (#) of blocks, and passes control to a function block 613. The function block 613 parses motion vector (MV) syntax, and passes control to a decision block 615. The decision block 615 determines whether or not motion_accuracy_adaptive_flag == 1 and mv_accuracy_adaptation_mode == 1. If so, then control is passed to a function block 620. Otherwise, control is passed to a function block 617. The function block 620 derives the dominant component and sets res x and res_y based on one or more of the following, thereafter passing control to a function block 625: motion vector predictors; neighboring motion vectors; partition shape; integer motion amplitude; global motion; and/or rate distortion cost. The function block 625 decodes the motion vector based on res_x and res_y, and passes control to the function block 630. The function block 630 performs motion compensation, and passes control to a loop limit block 632. The loop limit block 632 ends the loop, and passes control to an end block 699. The function block 617 reconstructs a motion vector using uniform accuracy or other adaptive accuracy methods, and passes control to the function block 630.

### QP adaptive motion vector accuracy

Video encoders use the quantization parameter QP to control the quality of the encoded video. When the quantization parameter is large, the quality of the reference frames (which are reconstructions of previously encoded frames) is low. In particular, the reference frames tend to be smooth as most details are removed in the encoding process. Therefore, motion vectors with a small difference can give very similar predictions and high accuracy motion vectors are not necessary. Thus, in an embodiment, we adapt the motion vector accuracy to one or more quantization parameters.

In one embodiment, the motion vector accuracy is adapted to the encoding quantization parameter (QP) or the quantization step size. Let us presume that mv is the motion vector found by motion estimation and *mvp* is the predicted motion vector. The difference is denoted as *mvd,* where *mvd=mv-mvp.* Let *mvq* be the quantized *mvd* which will be transmitted to the decoder, where *mvq=Q(mvd,q_mv)* and where Q is the *mvd* quantization process and *q_mv* is a quantization step size (e.g., *q_mv* = 0.5 means half-pel accuracy, *q_mv* = 0.25 means quarter-pel accuracy, and so forth). We let the motion vector accuracy be a function of the encoding QP, *q_mv* = *f*(QP). For example, when QP is smaller than a threshold, then a small value of *q_mv* is selected. Otherwise, when QP is larger than a threshold, then a large value of *q_mv* is selected.

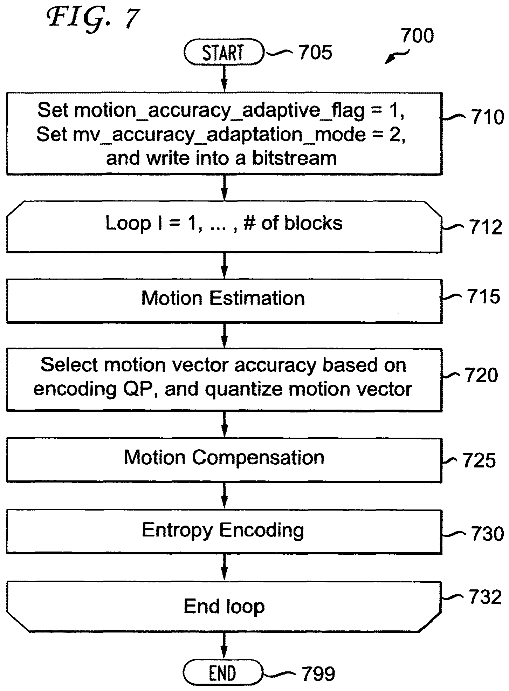

Turning to FIG. 7, an exemplary method for encoding picture data using adaptive coding of motion information based on quantization parameter is indicated generally by the reference numeral 700. The method 700 includes a start block 705 that passes control to a function block 710. The function block 710 sets motion_accuracy_adaptive_flag = 1, sets mv_accuracy_adaptation_mode = 2, writes motion_accuracy_adaptive_flag and mv_accuracy_adaptation_mode into the bitstream, and passes control to a loop limit block 712. The loop limit block 712 begins a loop using a variable I having a range from 1 to a number (#) of blocks, and passes control to a function block 715. The function block 715 performs motion estimation, and passes control to a function block 720. The function block 720 selects the motion vector accuracy based on encoding quantization parameter (QP), quantize a resultant motion vector from the motion estimation (performed by function block 715) using the selected motion vector accuracy, and passes control to a function block 725. The function block 725 performs motion compensation, and passes control to a function block 730. The function block 730 performs entropy encoding, and passes control to a loop limit block 732. The loop limit block 732 ends the loop, and passes control to an end block 799.

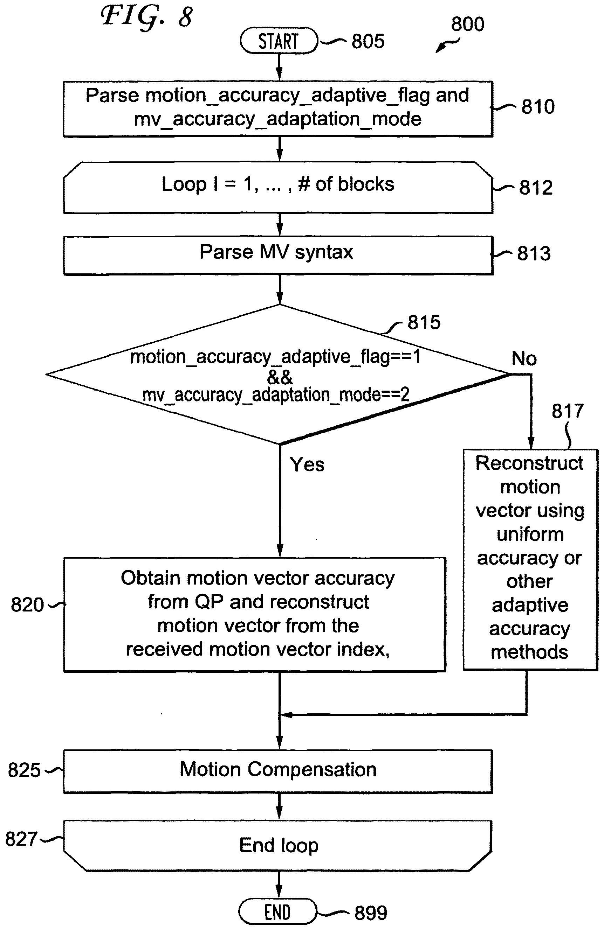

Turning to FIG. 8, an exemplary method for decoding picture data using adaptive coding of motion information based on quantization parameter is indicated generally by the reference numeral 800. The method 800 includes a start block 805 that passes control to a function block 810. The function block 810 parses motion_accuracy_adaptive_flag and mv_accuracy_adaptation_mode, and passes control to a loop limit block 812. The loop limit block 812 begins a loop using a variable I having a range from 1 to the number (#) of blocks, and passes control to a function block 813. The function block 813 parses motion vector (MV) syntax, and passes control to a decision block 815. The decision block 815 determines whether or not motion_accuracy_adaptive_flag == 1 and mv_accuracy_adaptation_mode == 2. If so, then control is passed to a function block 820. Otherwise, control is passed to a function block 817. The function block 820 obtains a motion vector accuracy from a quantization parameter (QP), reconstructs the motion vector from a received motion vector index, and passes control to the function block 825. The function block 825 performs motion compensation, and passes control to a loop limit block 827. The loop limit block ends the loop, and passes control to an end block 899. The function block 817 reconstructs a motion vector using uniform accuracy or other adaptive accuracy methods, and passes control to the function block 825.

**Content adaptive motion vector accuracy**

For smooth regions in video signals, motion vectors with a small difference may provide very similar predictions, and thus the benefit from high accuracy motion vectors is limited. On the other hand, for object edges and textured regions, a slight mismatch between a prediction and the current signal can greatly increase the prediction errors, so an accurate motion vector is highly desirable. In consideration of this relationship, in an embodiment, we adapt the motion vector accuracy to the picture (or sequence) content.

In one embodiment, the motion vector accuracy is adaptive responsive to the picture content. Let $S$ be a subset signal of the video sequence. $S$ can be a number of consecutive frames, a single frame or a number of neighboring blocks. Define $h(S)$ to be the complexity function of S. For example, $h(S)$ can be the variance of pixels in S, the variance of the reconstructed residue, or the orientation and strength of the edges in $S$. The value of the motion vector accuracy $q\_mv$ for S is selected based on $h(S)$. For example, when the content has high complexity and $h(S)$ is large, then the value of $q\_mv$ is small. On the other hand, when the content has low complexity and $h(S)$ is small, then the value of $q\_mv$ is large. For this embodiment, $q\_mv$ may be sent by the encoder (explicit signaling) or can be inferred at the decoder (implicit signaling).

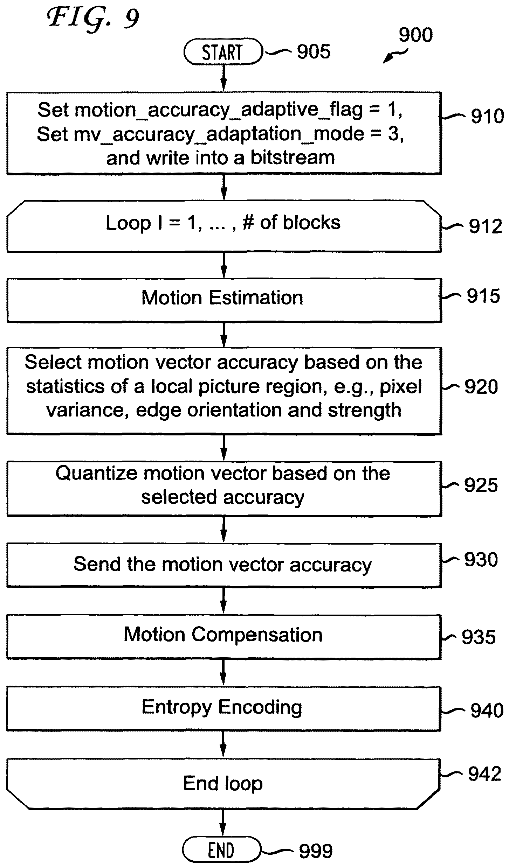

Turning to FIG. 9, an exemplary method for encoding picture data using adaptive coding of motion information based on video content with explicit signaling is indicated generally by the reference numeral 900. The method 900 includes a start block 905 that passes control to a function block 910. The function block 910 sets motion_accuracy_adaptive_flag = 1, sets mv_accuracy_adaptation mode = 3, writes motion_accuracy_adaptive_flag and mv_accuracy_adaptation_mode into the bitstream, and passes control to a loop limit block 912. The loop limit block 912 begins a loop using a variable I having a range from 1 to the number (#) of blocks, and passes control to a function block 915. The function block 915 performs motion estimation, and passes control to a function block 920. The function block 920 selects a motion vector accuracy based on statistics on a local picture region, e.g., pixel variance, edge orientation, strength, etc., and passes control to a function block 925. The function block 925 quantizes the motion vector based on the selected accuracy, and passes control to a function block 930. The function block 930 sends the motion vector accuracy (e.g., to a corresponding decoder), and passes control to a function block 935. The function block 935 performs motion compensation, and passes control to a function block 940. The function block 940 performs entropy encoding, and passes control to a loop limit block 942. The loop limit block 942 ends the loop, and passes control to an end block 999.

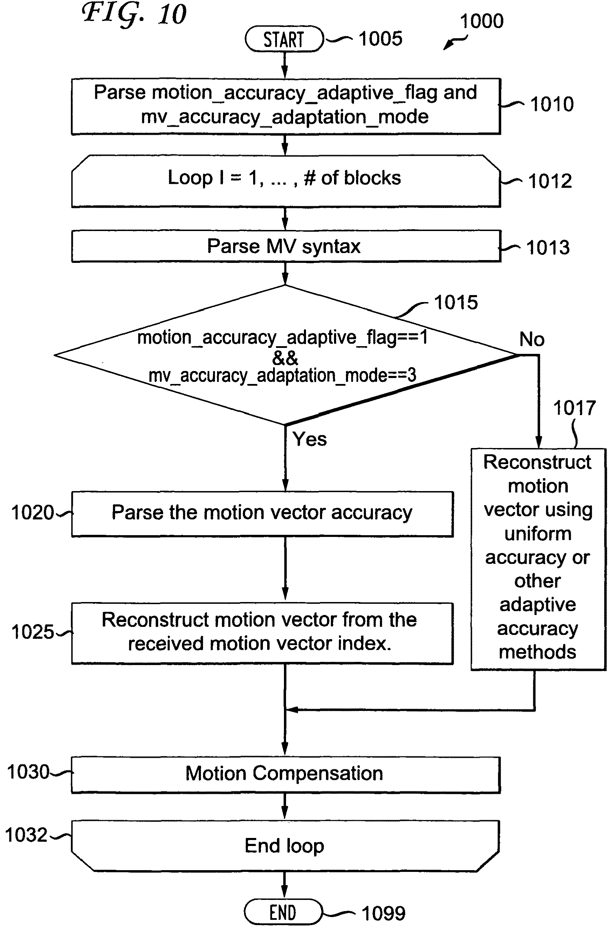

Turning to FIG. 10, an exemplary method for decoding picture data using adaptive coding of motion information based on video content with explicit signaling is indicated generally by the reference numeral 1000. The method 1000 includes a start block 1005 that passes control to a function block 1010. The function block 1010 parses motion_accuracy_adaptive_flag and mv_accuracy_adaptation_mode, and passes control to a loop limit block 1012. The loop limit block 1012 begins a loop using a variable I having a range from 1 to the number (#) of blocks, and passes control to a function block 1013. The function block 1013 parses motion vector (MV) syntax, and passes control to a decision block 1015. The decision block 1015 determines whether or not motion_accuracy_adaptive_flag == 1 and mv_accuracy_adaptation mode == 3. If so, then control is passed to a function block 1020. Otherwise, control is passed to a function block 1017. The function block 1020 parses a motion vector accuracy, and passes control to the function block 1025. The function block 1025 reconstructs the motion vector from the received motion vector index, and passes control to the function block 1030. The function block 1030 performs motion compensation, and passes control to a loop limit block 1032. The loop limit block 1032 ends the loop, and passes control to an end block 1099. The function block 1017 reconstructs a motion vector using uniform accuracy or other adaptive accuracy methods, and passes control to the function block 1030.

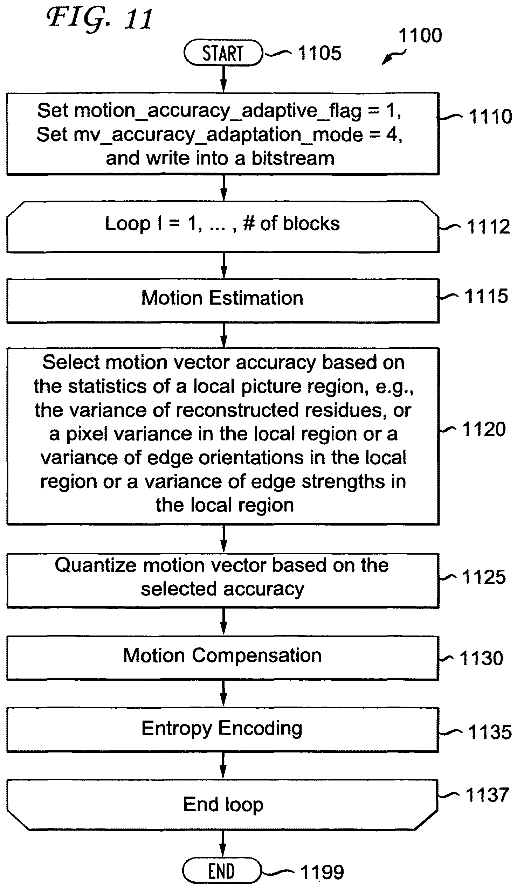

Turning to FIG. 11, an exemplary method for encoding picture data using adaptive coding of motion information based on video content with implicit signaling is indicated generally by the reference numeral 1100. The method 1100 includes a start block 1105 that passes control to a function block 1110. The function block 1110 sets motion_accuracy_adaptive_flag = 1, sets mv_accuracy_adaptation_mode = 4, writes motion_accuracy_adaptive_flag and mv_accuracy_adaptation_mode into the bitstream, and passes control to a loop limit block 1112. The loop limit block 1112 begins a loop using a variable I having a range from 1 to the number (#) of blocks, and passes control to a function block 1115. The function block 1115 performs motion estimation, and passes control to a function block 1120. The function block 1120 selects a motion vector accuracy based on statistics of a local picture region, e.g., the variance of reconstructed pictures, etc., and passes control to a function block 1125. The function block 1125 quantizes the motion vector components based on the selected accuracy, and passes control to a function block 1130. The function block 1130 performs motion compensation, and passes control to a function block 1135. The function block 1135 performs entropy encoding, and passes control to a loop limit block 1137. The loop limit block 1137 ends the loop, and passes control to an end block 1199.

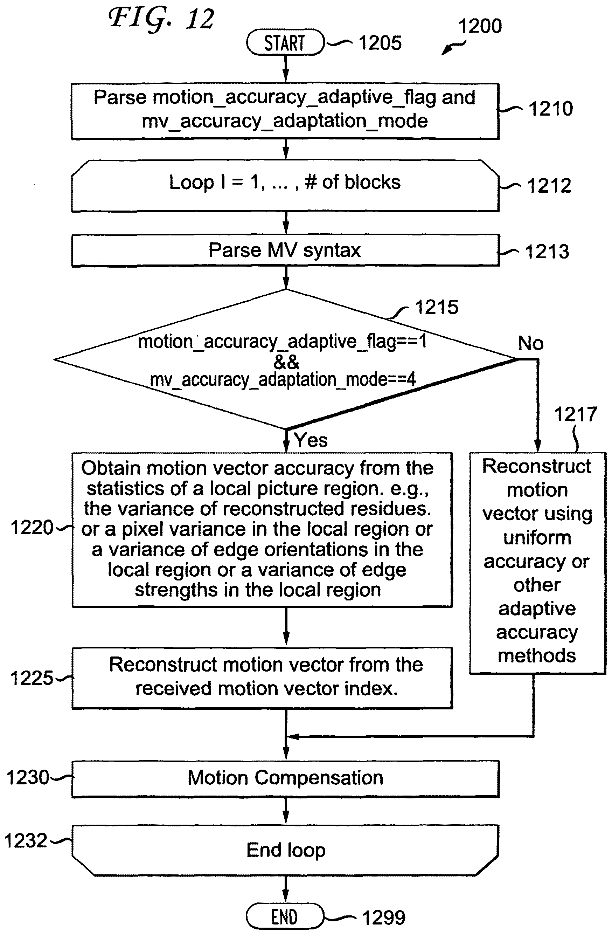

Turning to FIG. 12, an exemplary method for decoding picture data using adaptive coding of motion information based on video content with implicit signaling is indicated generally by the reference numeral 1200. The method 1200 includes a start block 1205 that passes control to a function block 1210. The function block 1210 parses motion_accuracy_adaptive_flag and mv_accuracy_adaptation_mode, and passes control to a loop limit block 1212. The loop limit block 1212 begins a loop using a variable I having a range from 1 to the number (#) of blocks, and passes control to a function block 1213. The function block 1213 parses motion vector (MV) syntax, and passes control to a decision block 1215. The decision block 1215 determines whether or not motion_accuracy_adaptive_flag == 1 and mv_accuracy_adaptation mode == 4. If so, then control is passed to a function block 1220. Otherwise, control is passed to a function block 1217. The function block 1220 obtains a motion vector accuracy from the statistics of a local picture region, and passes control to a function block 1225. The function block 1225 reconstructs a motion vector from a received motion vector index, and passes control to the function block 1230. The function block 1230 performs motion compensation, and passes control to a loop limit block 1232. The loop limit block 1232 ends the loop, and passes control to an end block 1299. The function block 1217 reconstructs a motion vector using uniform accuracy or other adaptive accuracy methods, and passes control to the function block 1230.

**Motion vector amplitude adaptation**

In video coding, the difference between the searched motion vector and the predicted motion vector is encoded, which is *mvd* as we defined above. With effective motion estimation employed by video encoders, most of the time the value of *mvd* is very small. However, when the video block does not have good features for a motion search, then the searched *mv* is not reliable and exhibits some randomness. In this case, the amplitude *of mvd* can be quite large. As the searched *mv* is not reliable, then too many bits for *mvd* coding are not necessary. We prefer that when *mvd* has a large amplitude, it should be coarsely quantized (low motion vector accuracy) in order to save bits.

In one embodiment, the motion vector accuracy *q_mv* is a function of the amplitude of motion vector difference *mvd*, *q_mv=f(|mvd|)*. One exemplary accuracy function of *f* can be: *f(x)=0.25* when *x <= T;* and *0.5* when *x >T*, where *T* is a threshold value.

In this example, the quantization *of mvd* is as follows:

$$Idx\_mvd = \begin{cases} sign(mvd) * rounding(|mvd|/0.25), & if\ |mvd| <= T \\ sign(mvd) * rounding(|mvd - T|/0.5 + T/0.25), & if\ |mvd| > T \end{cases}$$

where *Idx_mvd* is the quantization index *of mvd*.

The reconstruction of *mvd, mvq,* is as follows:

$$mvq = \begin{cases} Idx\_mvd * 0.25, & if\ |Idx\_mvd| <= T/0.25 \\ (Idx\_mvd - T/0.25) * 0.5 + T/0.25, & if\ |Idx\_mvd| > T/0.25 \end{cases}$$

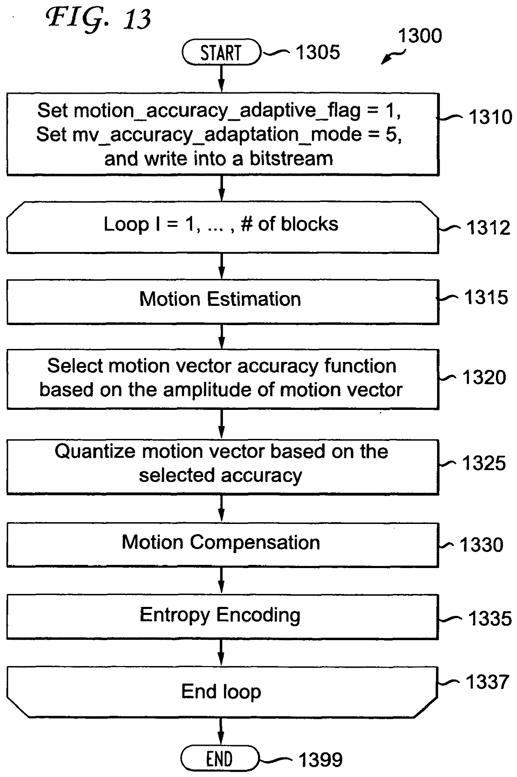

Turning to FIG. 13, an exemplary method for encoding picture data using adaptive coding of motion information based on motion vector amplitude is indicated generally by the reference numeral 1300. The method 1300 includes a start block 1305 that passes control to a function block 1310. The function block 1310 sets motion_accuracy_adaptive_flag = 1, sets mv_accuracy_adaptation_mode = 5, and passes control to a loop limit block 1312. The loop limit block 1312 begins a loop using a variable I having a range from 1 to the number (#) of blocks, and passes control to a function block 1315. The function block 1315 performs motion estimation, and passes control to a function block 1320. The function block 1320 selects the accuracy function based on the amplitude of a motion vector, and passes control to a function block 1325. The function block 1325 quantizes the motion vector components based on the selected function, and passes control to a function block 1330. The function block 1330 performs motion compensation, and passes control to a function block 1335. The function block 1335 performs entropy encoding, and passes control to a loop limit block 1337. The loop limit block 1337 ends the loop, and passes control to an end block 1399.

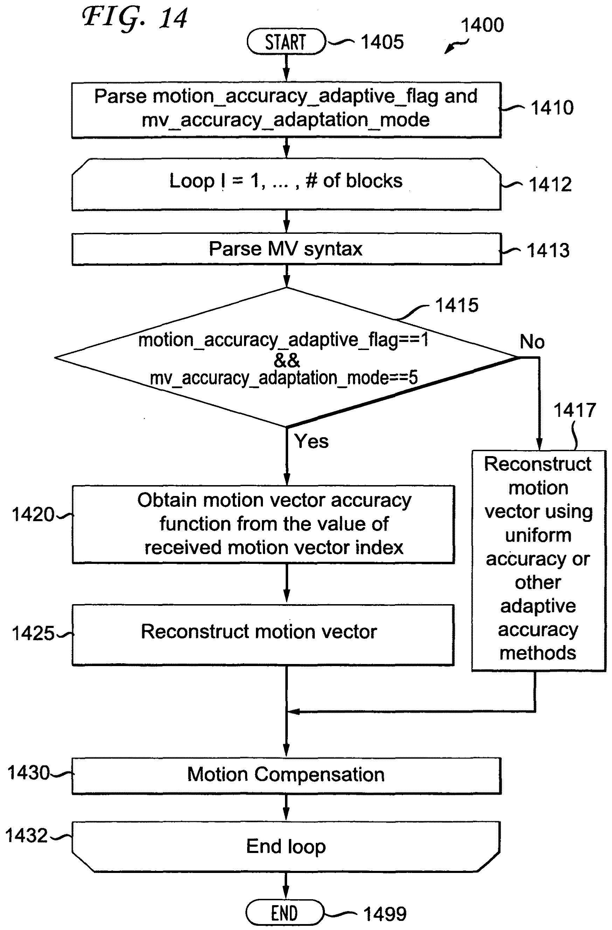

Turning to FIG. 14, an exemplary method for decoding picture data using adaptive coding of motion information based on motion vector amplitude with implicit signaling is indicated generally by the reference numeral 1400. The method 1400 includes a start block 1405 that passes control to a function block 1410. The function block 1410 parses motion_accuracy_adaptive_flag and mv_accuracy_adaptation_mode, and passes control to a loop limit block 1412. The loop limit block 1412 begins a loop using a variable I having a range from 1 to the number (#) of blocks, and passes control to a function block 1413. The function block 1413 parses motion vector (MV) syntax, and passes control to a decision block 1415. The decision block 1415 determines whether or not motion_accuracy_adaptive_flag == 1 and mv_accuracy_adaptation mode == 5. If so, then control it passed to a function block 1420. Otherwise, control is passed to a function block 1417. The function block 1420 obtains a motion vector accuracy function from the value of a received motion vector index, and passes control to a function block 1425. The function block 1425 reconstructs a motion vector (from a received motion vector index), and passes control to the function block 1430. The function block 1430 performs motion compensation, and passes control to a loop limit block 1432. The loop limit block 1432 ends the loop, and passes control to an end block 1499. The function block 1417 reconstructs a motion vector using uniform accuracy or other adaptive accuracy methods, and passes control to the function block 1430.

**Syntax**

TABLE 2 shows exemplary picture and slice header syntax in accordance with an embodiment of the present principles.

TABLE 2

| picture_header() { | **Descriptor** |
|---|---|
| ... | |
| **motion_accuracy_adaptive_flag** | u(1) |
| ... | |
| } | |
| slice_header( ) { | |
| ... | |
| if (motion_accuracy_adaptive_flag) { | |
| **mv_accuracy_adaptation_mode** | u(3) |
| if (mv_accuracy_adaptation_mode ! = 1) { | |
| **q_mv_signaling** | u(1) |
| if(q_mv_signaling) | |
| **q_mv** | u(v) |
| } | |
| if (mv_accuracy_adaptation_mode == 1) { | |
| **res_mv_signaling** | u(1) |
| if (res_mv_signaling){ | |
| **res_x** | u(2) |
| **res_y** | u(2) |
| } | |

(continued)

| picture_header() { | Descriptor |
|---|---|
| } | |
| } | |
| ... | |
| } | |

The semantics of some of the syntax elements of TABLE 2 are as follows:

**motion_accuracy_adaptive_flag** specifies whether motion vector accuracy adaptation is used for the picture. motion_accuracy_adaptive_flag equal to 1 indicates that a motion accuracy adaptation scheme is used in the picture; motion_accuracy_adaptive_flag equal to 0 indicates that a motion accuracy adaptation scheme is not used in the picture.

**mv_accuracy_adaptation_mode** specifies the motion vector accuracy adaptation approach that is used for the slice. mv_accuracy_adaptation mode equal to 0 indicates that partition size based motion vector accuracy adaptation is enabled. mv_accuracy_adaptation_mode equal to 1 indicates that direction based motion vector accuracy adaptation is enabled. mv_accuracy_adaptation_mode equal to 2 indicates that QP based motion vector accuracy adaptation is enabled. mv_accuracy_adaptation mode equal to 3 indicates that content based motion vector accuracy adaptation with explicit signaling is enabled. mv_accuracy_adaptation_mode equal to 4 indicates that content based motion vector accuracy adaptation with implicit signaling is enabled. mv_accuracy_adaptation_mode equal to 5 indicates that amplitude based motion vector accuracy adaptation is enabled.

**q_mv** specifies the quantization step that is used for quantizing a motion vector in addition to the default quantization step size.

**res_x** specifies the accuracy of the horizontal component of a motion vector.

**res_y** specifies the accuracy of the vertical component of a motion vector.

**q_mv_signaling** specifies explicit or implicit signaling. q_mv_signaling equal to 1 indicates that q_mv will be explicitly signaled. q_mv_signaling equal to 0 indicates that q_mv will not be explicitly signaled.

**res_mv_signaling** specifies explicit or implicit signaling of res x and res_y. res_mv_signaling equal to 1 indicates that res_x and res_y will be explicitly signaled. res_mv_signaling equal to 0 indicates that res x and res_y will not be explicitly signaled.

A description will now be given of some of the many attendant advantages/features of the present invention, some of which have been mentioned above. For example, one advantage/feature is an apparatus having an encoder for encoding at least a block in a picture using a motion vector. An adaptive motion vector accuracy scheme is used to select an accuracy of the motion vector used to encode the block. Selection criteria for selecting the accuracy for the motion vector include non-rate-distortion-based criteria.

Another advantage/feature is the apparatus having the encoder as described above, wherein the selection criteria include a motion compensation partition size.

Yet another advantage/feature is the apparatus having the encoder as described above, wherein the selection criteria include a motion vector component direction, and the accuracy of the motion vector used to encode the block is selected to be different in a vertical component when compared to a horizontal component of the motion vector, and a component having a greatest accuracy from among the vertical component and the horizontal component is selected as a dominant component.

Still another advantage/feature is the apparatus having the encoder wherein the selection criteria include motion vector component direction, and the accuracy of the motion vector used to encode the block is selected to be different in a vertical component when compared to a horizontal component of the motion vector, and a component having a greatest accuracy from among the vertical component and the horizontal component is selected as a dominant component as described above, wherein the dominant component is determined responsive to at least one:

(i) an amplitude of the motion vector, when the motion vector is an integer motion vector,

(ii) a shape of a motion compensation partition for the block,

(iii) a predicted motion vector for the block,

(iv) a motion vector of neighboring blocks with respect to the block, and

(v) global motion information pertaining to at least one of the picture and one or more other pictures, the picture and the one or more other pictures being included in a same video sequence.

Yet another advantage/feature is the apparatus having the encoder as described above, wherein the selection criteria include an encoding quantization parameter of the block.

Moreover, another advantage/feature is the apparatus having the encoder as described above, wherein the selection criteria comprises statistics of a local picture region, the local picture region corresponding to at least one of a portion of the picture, the picture, and one or more other pictures, and wherein the picture and the one or more other pictures are included in a same video sequence.

Also, another advantage/feature is the apparatus having the encoder wherein the selection criteria include statistics of a local picture region, the local picture region corresponding to at least one of a portion of the picture, the picture, and one or more other pictures, and wherein the picture and the one or more other pictures are included in a same video sequence as described above, wherein the statistics of the local picture region are selected from at least one of:

(i) a pixel variance in the local region,

(ii) a variance of decoded residue coefficients in the local region,

(iii) a variance of edge orientations in the local region, and

(iv) a variance of edge strengths in the local region.

Additionally, another advantage feature is the apparatus having the encoder as described above, wherein the selection criteria include an amplitude of a searched motion vector.

Moreover, another advantage/feature is the apparatus having the encoder as described above, wherein the accuracy of the motion vector used to encode the block is explicitly signaled in an encoded bitstream.

Further, another advantage/feature is the apparatus having the encoder as described above, wherein the accuracy of the motion vector used to encode the block is inferred from previously decoded video in the picture or in a sequence that includes the picture.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles is not limited to those precise embodiments, and that various changes and modifications may be effected therein by one of ordinary skill in the pertinent art without departing from the scope or spirit of the present principles. All such changes and modifications are intended to be included within the scope of the present principles as set forth in the appended claims.

**Claims**

1.   An apparatus, comprising:

a processor configured to encode a block in a picture using a motion vector, wherein an adaptive motion vector accuracy scheme is used to select an accuracy of the motion vector used to encode the block, and wherein at least one flag is indicative of motion vector accuracy adaptation for the block.

2. In a video encoder, a method, comprising:
encoding a block in a picture using a motion vector, wherein an adaptive motion vector accuracy scheme is used to select an accuracy of the motion vector used to encode the block, and wherein at least one flag is indicative of motion vector accuracy adaptation for the block.

3. The method of claim 2, wherein a dominant motion vector component is determined responsive to at least one: an amplitude of the motion vector, when the motion vector is an integer motion vector, and a motion vector of neighboring blocks with respect to the block.

4. The method of claim 2, wherein additional syntax indicates precision of a motion vector.

5. The method of claim 2, wherein selection criteria for motion vector accuracy comprise statistics of a local picture region, the local picture region corresponding to at least one of a portion of the picture, the picture, and one or more other pictures, and wherein the picture and the one or more other pictures are included in a same video sequence.

6. The method of claim 5, wherein the statistics of the local picture region are selected from at least one of:

   (i) a pixel variance in the local region,
   (ii) a variance of decoded residue coefficients in the local region,
   (iii) a variance of edge orientations in the local region, and
   (iv) a variance of edge strengths in the local region.

7. The method of claim 2, wherein selection criteria for motion vector accuracy comprise an amplitude of a searched motion vector.

8. An apparatus, comprising:
a processor configured to decode a block in a picture using a motion vector, wherein an adaptive motion vector accuracy scheme is used to select an accuracy of the motion vector used to decode the block, and wherein at least one flag is indicative of motion vector accuracy adaptation for the block.

9. In a video decoder, a method, comprising:
decoding a block in a picture using a motion vector, wherein an adaptive motion vector accuracy scheme is used to select an accuracy of the motion vector used to decode the block, and wherein at least one flag is indicative of motion vector accuracy adaptation for the block.

10. The method of claim 9, wherein a dominant motion vector component is determined responsive to at least one: an amplitude of the motion vector, when the motion vector is an integer motion vector, and a motion vector of neighboring blocks with respect to the block.

11. The method of claim 9, wherein additional syntax indicates precision of a motion vector.

12. The method of claim 9, wherein selection criteria for motion vector accuracy comprise statistics of a local picture region, the local picture region corresponding to at least one of a portion of the picture, the picture, and one or more other pictures, and wherein the picture and the one or more other pictures are included in a same video sequence.

13. The method of claim 12, wherein the statistics of the local picture region are selected from at least one of:

   (i) a pixel variance in the local region,
   (ii) a variance of decoded residue coefficients in the local region,
   (iii) a variance of edge orientations in the local region, and
   (iv) a variance of edge strengths in the local region.

14. The method of claim 9, wherein selection criteria for motion vector accuracy comprise an amplitude of a searched motion vector.

**15.** A non-transitory computer readable storage media having video signal data encoded thereupon, comprising:
a block in a picture encoded using a motion vector, wherein an adaptive motion vector accuracy scheme is used to select an accuracy of the motion vector used to encode the block, and wherein at least one flag is indicative of motion vector accuracy adaptation for the block.

FIG. 1

FIG. 2

EP 3 633 996 A1

## FIG. 3

START — 305

300

Set motion_accuracy_adaptive_flag = 1,
Set mv_accuracy_adaptation_mode = 0,
write motion_accuracy_adaptive_flag
and mv_accuracy_adaptation_mode
into a bitstream — 310

Loop I = 1, ... , # of blocks — 312

Motion Estimation — 315

Quantize motion vector based on
partition size:

16x16, 16x8, 8x16, use 1/8 pel accuracy;
8x8, use 1/4 pel accuracy; and
8x4, 4x8, 4x4, use 1/2 pel accuracy — 320

Motion Compensation — 325

Entropy Encoding — 330

End loop — 332

END — 399

## FIG. 4

400

```
( START )── 405

┌─────────────────────────────────────────┐
│ Parse motion_accuracy_adaptive_flag and  │── 410
│      mv_accuracy_adaptation_mode          │
└─────────────────────────────────────────┘
                    │
┌─────────────────────────────────────────┐
│       Loop I = 1, ... , # of blocks       │── 412
└─────────────────────────────────────────┘
                    │
┌─────────────────────────────────────────┐
│              Parse MV syntax              │── 413
└─────────────────────────────────────────┘
```

415

motion_accuracy_adaptive_flag==1
&&
mv_accuracy_adaptation_mode==0

No

Yes

417

420 —
Decode motion vector based on
partition size determined accuracy:
16x16, 16x8, 8x16,
use 1/8 pel accuracy; 8x8,
use 1/4 pel accuracy; and
8x4, 4x8, 4x4, use 1/2 pel accuracy

Reconstruct
motion
vector using
uniform
accuracy or
other
adaptive
accuracy
methods

425 — Motion Compensation

427 — End loop

( END )── 499

*FIG. 5*

( START )—505    500

Set motion_accuracy_adaptive_flag = 1,
set mv_accuracy_adaptation_mode = 1,
write motion_accuracy_adaptive_flag
and mv_accuracy_adaptation_mode
into a bitstream — 510

Loop I = 1, ... , # of blocks — 512

Motion Estimation — 515

Derive the dominant component and
set res_x and res_y based on:
motion vector predictors;
neighoring motion vectors;
partition shape;
integer motion amplitude;
global motion, and/or rate distortion cost — 520

Quantize motion vector components
based on res_x and res_y — 525

Motion Compensation — 530

Entropy Encoding — 535

End loop — 537

( END )—599

FIG. 6

START — 605

600

Parse motion_accuracy_adaptive_flag and mv_accuracy_adaptation_mode — 610

Loop I = 1, ... , # of blocks — 612

Parse MV syntax — 613

615

motion_accuracy_adaptive_flag==1 && mv_accuracy_adaptation_mode==1    No

Yes

620 — Derive the dominant component and set res_x and res_y based on:
motion vector predictors;
neighoring motion vectors;
partition shape;
integer motion amplitude;
and/or global motion

617

Reconstruct motion vector using uniform accuracy or other adaptive accuracy methods

625 — Decode motion vector based on res_x and res_y

630 — Motion Compensation

632 — End loop

END — 699

## FIG. 7

START — 705

700

Set motion_accuracy_adaptive_flag = 1,
Set mv_accuracy_adaptation_mode = 2,
and write into a bitstream — 710

Loop I = 1, ... , # of blocks — 712

Motion Estimation — 715

Select motion vector accuracy based on
encoding QP, and quantize motion vector — 720

Motion Compensation — 725

Entropy Encoding — 730

End loop — 732

END — 799

*FIG. 8*

START — 805

800

Parse motion_accuracy_adaptive_flag and
mv_accuracy_adaptation_mode — 810

Loop I = 1, ... , # of blocks — 812

Parse MV syntax — 813

815

motion_accuracy_adaptive_flag==1
&&
mv_accuracy_adaptation_mode==2

No

817

Yes

820 — Obtain motion vector accuracy
from QP and reconstruct
motion vector from the
received motion vector index,

Reconstruct
motion
vector using
uniform
accuracy or
other
adaptive
accuracy
methods

825 — Motion Compensation

827 — End loop

END — 899

# FIG. 9

START — 905

900

Set motion_accuracy_adaptive_flag = 1,
Set mv_accuracy_adaptation_mode = 3,
and write into a bitstream — 910

Loop I = 1, ... , # of blocks — 912

Motion Estimation — 915

Select motion vector accuracy based on the
statistics of a local picture region, e.g., pixel
variance, edge orientation and strength — 920

Quantize motion vector based on the
selected accuracy — 925

Send the motion vector accuracy — 930

Motion Compensation — 935

Entropy Encoding — 940

End loop — 942

END — 999

*FIG. 10*

START — 1005

1000

Parse motion_accuracy_adaptive_flag and
mv_accuracy_adaptation_mode — 1010

Loop I = 1, ... , # of blocks — 1012

Parse MV syntax — 1013

1015

motion_accuracy_adaptive_flag==1
&&
mv_accuracy_adaptation_mode==3

No

Yes

1017

1020 — Parse the motion vector accuracy

Reconstruct
motion
vector using
uniform
accuracy or
other
adaptive
accuracy
methods

1025 — Reconstruct motion vector from the
received motion vector index.

1030 — Motion Compensation

1032 — End loop

END — 1099

## FIG. 11

START — 1105    1100

Set motion_accuracy_adaptive_flag = 1,
Set mv_accuracy_adaptation_mode = 4,
and write into a bitstream — 1110

Loop I = 1, ... , # of blocks — 1112

Motion Estimation — 1115

Select motion vector accuracy based on
the statistics of a local picture region, e.g.,
the variance of reconstructed residues, or
a pixel variance in the local region or a
variance of edge orientations in the local
region or a variance of edge strengths in
the local region — 1120

Quantize motion vector based on the
selected accuracy — 1125

Motion Compensation — 1130

Entropy Encoding — 1135

End loop — 1137

END — 1199

## FIG. 12

START — 1205

1200

Parse motion_accuracy_adaptive_flag and mv_accuracy_adaptation_mode — 1210

Loop I = 1, ... , # of blocks — 1212

Parse MV syntax — 1213

1215

motion_accuracy_adaptive_flag==1 && mv_accuracy_adaptation_mode==4

No

1217

Yes

1220 — Obtain motion vector accuracy from the statistics of a local picture region. e.g., the variance of reconstructed residues. or a pixel variance in the local region or a variance of edge orientations in the local region or a variance of edge strengths in the local region

Reconstruct motion vector using uniform accuracy or other adaptive accuracy methods

1225 — Reconstruct motion vector from the received motion vector index.

1230 — Motion Compensation

1232 — End loop

END — 1299

## FIG. 13

START — 1305          1300

Set motion_accuracy_adaptive_flag = 1,
Set mv_accuracy_adaptation_mode = 5,
and write into a bitstream — 1310

Loop I = 1, ... , # of blocks — 1312

Motion Estimation — 1315

Select motion vector accuracy function
based on the amplitude of motion vector — 1320

Quantize motion vector based on the
selected accuracy — 1325

Motion Compensation — 1330

Entropy Encoding — 1335

End loop — 1337

END — 1399

## FIG. 14

START — 1405

1400

Parse motion_accuracy_adaptive_flag and mv_accuracy_adaptation_mode — 1410

Loop I = 1, ... , # of blocks — 1412

Parse MV syntax — 1413

1415

motion_accuracy_adaptive_flag==1 && mv_accuracy_adaptation_mode==5

No

Yes

1417

1420 — Obtain motion vector accuracy function from the value of received motion vector index

Reconstruct motion vector using uniform accuracy or other adaptive accuracy methods

1425 — Reconstruct motion vector

1430 — Motion Compensation

1432 — End loop

END — 1499

Europäisches
Patentamt

European
Patent Office

Office européen
des brevets

## EUROPEAN SEARCH REPORT

Application Number

EP 19 21 0847

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/109904 A1 (HAMADA KOICHI [JP]) 25 May 2006 (2006-05-25) * figures 1,5,7 * * paragraph [0028] - paragraph [0030] * * paragraph [0032] - paragraph [0035] * ----- | 1-15 | INV. H04N19/523 H04N19/51 H04N19/517 H04N19/70 |
| A | IU S-L ED - INSTITUTE OF ELECTRICAL AND ELECTRONICS ENGINEERS: "Comparison of motion compensation using different degrees of sub-pixel accuracy for interfield/interframe hybrid coding of HDTV image sequences", SPEECH PROCESSING 1. SAN FRANCISCO, MAR. 23 - 26, 1992; [PROCEEDINGS OF THE INTERNATIONAL CONFERENCE ON ACOUSTICS, SPEECH AND SIGNAL PROCESSING (ICASSP)], NEW YORK, IEEE, US, vol. 3, 23 March 1992 (1992-03-23), pages 465-468, XP010058910, DOI: DOI:10.1109/ICASSP.1992.226175 ISBN: 978-0-7803-0532-8 * figure 1 * * paragraph [0002] * ----- | 1-15 | |
| A | EP 1 499 134 A1 (NEC CORP [JP]) 19 January 2005 (2005-01-19) * figures 3,5,7-10,14 * * paragraph [0058] - paragraph [0079] * ----- | 1-15 | TECHNICAL FIELDS SEARCHED (IPC) H04N |
| A | EP 2 091 258 A1 (HUAWEI TECH CO LTD [CN]) 19 August 2009 (2009-08-19) * figure 5 * * paragraph [0010] - paragraph [0027] * * paragraph [0038] - paragraph [0095] * ----- -/-- | 1-15 | |

The present search report has been drawn up for all claims

| Place of search | Date of completion of the search | Examiner |
|---|---|---|
| Munich | 12 December 2019 | Kuhn, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 19 21 0847

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/175322 A1 (LEE KYO-HYUK [KR] ET AL) 24 July 2008 (2008-07-24)<br>* figures 5, 6,12, 14 *<br>* paragraph [0034] - paragraph [0048] *<br>----- | 1-15 | |
| A | VATIS Y ET AL: "Adaptive Interpolation Filter for H.264/AVC",<br>IEEE TRANSACTIONS ON CIRCUITS AND SYSTEMS FOR VIDEO TECHNOLOGY, IEEE SERVICE CENTER, PISCATAWAY, NJ, US,<br>vol. 19, no. 2,<br>1 February 2009 (2009-02-01), pages 179-192, XP011280566,<br>ISSN: 1051-8215, DOI: DOI:10.1109/TCSVT.2008.2009259<br>* figure 1 *<br>* paragraph [000I] - paragraph [000V] *<br>----- | 1-15 | |
| A | WEDI T: "Adaptive interpolation filters and high-resolution displacements for video coding",<br>IEEE TRANSACTIONS ON CIRCUITS AND SYSTEMS FOR VIDEO TECHNOLOGY, IEEE SERVICE CENTER, PISCATAWAY, NJ, US,<br>vol. 16, no. 4, 1 April 2006 (2006-04-01), pages 484-491, XP002464225,<br>ISSN: 1051-8215, DOI: DOI:10.1109/TCSVT.2006.870856<br>* paragraph [000I] - paragraph [00IV] *<br>----- | 1-15 | TECHNICAL FIELDS SEARCHED (IPC) |
| X | EP 1 863 289 A2 (MITSUBISHI ELECTRIC CORP [JP]) 5 December 2007 (2007-12-05)<br>* paragraph [0032] - paragraph [0040] *<br>* paragraph [0048] - paragraph [0057] *<br>* paragraph [0075] - paragraph [0076] *<br>* paragraph [0106] - paragraph [0117] *<br>* figures 1,3,5 *<br>-----<br>-/-- | 1-15 | |

The present search report has been drawn up for all claims

| Place of search | Date of completion of the search | Examiner |
|---|---|---|
| Munich | 12 December 2019 | Kuhn, Peter |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

**EUROPEAN SEARCH REPORT**

Application Number

EP 19 21 0847

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 895 425 A2 (VICTOR COMPANY OF JAPAN [JP]) 3 February 1999 (1999-02-03) <br> * paragraphs [0049], [0050], [0052] - [0055] * <br> * figures 3,5 * <br> ----- | 1-15 | |
| X | EP 1 469 682 A1 (HITACHI LTD [JP]) 20 October 2004 (2004-10-20) <br> * paragraph [0002] - paragraph [0024] * <br> * paragraph [0090] - paragraph [0101] * <br> * figures 19-24 * <br> ----- | 1-15 | |

TECHNICAL FIELDS
SEARCHED      (IPC)

The present search report has been drawn up for all claims

| Place of search | Date of completion of the search | Examiner |
|---|---|---|
| Munich | 12 December 2019 | Kuhn, Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 21 0847

This annex lists the patent family members relating to the patent documents cited in  the above-mentioned European search report.
The members are as contained in the European Patent Office EDP file on
The European Patent Office is in no way liable for these particulars which are merely given for the purpose of information.

12-12-2019

| Patent document cited in search report | Publication date | Patent family member(s) | Publication date |
|---|---|---|---|
| US 2006109904  A1 | 25-05-2006 | CN      1780401 A<br>JP   2006148615 A<br>US   2006109904 A1 | 31-05-2006<br>08-06-2006<br>25-05-2006 |
| EP 1499134  A1 | 19-01-2005 | CN      1625902 A<br>CN    101175207 A<br>CN    101686396 A<br>EP      1499134 A1<br>EP      3043561 A1<br>EP      3043563 A1<br>EP      3043564 A1<br>JP      4102973 B2<br>JP   2003319398 A<br>KR  20040096548 A<br>US   2005105617 A1<br>WO     03092300 A1 | 08-06-2005<br>07-05-2008<br>31-03-2010<br>19-01-2005<br>13-07-2016<br>13-07-2016<br>13-07-2016<br>18-06-2008<br>07-11-2003<br>16-11-2004<br>19-05-2005<br>06-11-2003 |
| EP 2091258  A1 | 19-08-2009 | AT       533305 T<br>CN    101198063 A<br>EP      2091258 A1<br>WO   2008067734 A1 | 15-11-2011<br>11-06-2008<br>19-08-2009<br>12-06-2008 |
| US 2008175322  A1 | 24-07-2008 | CN    101641960 A<br>EP      2127396 A1<br>KR  20080069110 A<br>US   2008175322 A1<br>WO   2008091068 A1 | 03-02-2010<br>02-12-2009<br>25-07-2008<br>24-07-2008<br>31-07-2008 |
| EP 1863289  A2 | 05-12-2007 | CA      2459229 A1<br>CN      1557099 A<br>CN      1819659 A<br>CN      1882094 A<br>CN      1905679 A<br>EP      1418763 A1<br>EP      1863289 A2<br>EP      2222085 A2<br>EP      2230848 A1<br>JP      4724351 B2<br>JP   2004048552 A<br>KR  20040036943 A<br>TW      I297134 B<br>TW      I395489 B<br>US   2004233990 A1<br>US   2008056371 A1<br>US   2008063068 A1<br>US   2008063069 A1 | 22-01-2004<br>22-12-2004<br>16-08-2006<br>20-12-2006<br>31-01-2007<br>12-05-2004<br>05-12-2007<br>25-08-2010<br>22-09-2010<br>13-07-2011<br>12-02-2004<br>03-05-2004<br>21-05-2008<br>01-05-2013<br>25-11-2004<br>06-03-2008<br>13-03-2008<br>13-03-2008 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 19 21 0847

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2019

| Patent document cited in search report | | Publication date | Patent family member(s) | | Publication date |
|---|---|---|---|---|---|
| | | | US 2008084930 A1 | | 10-04-2008 |
| | | | WO 2004008772 A1 | | 22-01-2004 |
| EP 0895425 | A2 | 03-02-1999 | CN | 1206993 A | 03-02-1999 |
| | | | DE | 69813688 T2 | 12-02-2004 |
| | | | EP | 0895425 A2 | 03-02-1999 |
| | | | JP | 2897763 B2 | 31-05-1999 |
| | | | JP | H1146364 A | 16-02-1999 |
| | | | KR | 19990014234 A | 25-02-1999 |
| | | | US | 6205176 B1 | 20-03-2001 |
| EP 1469682 | A1 | 20-10-2004 | CN | 1550110 A | 24-11-2004 |
| | | | EP | 1469682 A1 | 20-10-2004 |
| | | | HK | 1095461 A1 | 09-04-2010 |
| | | | JP | 4401783 B2 | 20-01-2010 |
| | | | JP | 5042267 B2 | 03-10-2012 |
| | | | JP | 2009171608 A | 30-07-2009 |
| | | | JP | W02003063503 A1 | 26-05-2005 |
| | | | KR | 20040075317 A | 27-08-2004 |
| | | | KR | 20070108571 A | 12-11-2007 |
| | | | US | 2008165856 A1 | 10-07-2008 |
| | | | US | 2008310511 A1 | 18-12-2008 |
| | | | WO | 03063503 A1 | 31-07-2003 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61251508